# EUROPEAN PATENT SPECIFICATION

(11) **EP 3 171 449 B1**
(45) Date of publication and mention of the grant of the patent: **19.05.2021**
(21) Application number: 16184790.0
(22) Date of filing: 18.08.2016
(51) Int. Cl.: H01M 12/08, H01M 4/38

(54) **LITHIUM AIR BATTERY COMPRISING A POLYMER ELECTROLYTE**
LITHIUM-LUFT-BATTERIE MIT EINEM POLYMERELEKTROLYTEN
BATTERIE AIR/LITHIUM COMPRENANT UN ÉLECTROLYTE POLYMÈRE

(30) Priority: 23.11.2015 US 201514949498; 16.02.2016 KR 20160017768
(43) Date of publication of application: 24.05.2017
(73) Proprietor: Samsung Electronics Co., Ltd., Suwon-si, Gyeonggi-do 16677 (KR); Massachusetts Institute Of Technology, Cambridge, MA 02139 (US)
(72) Inventor: MA, Sangbok, 16678 Gyeonggi-do (KR); KHITERER, Maria, Gyeonggi-do 16678 (KR); RYU, Younggyoon, 16678 Gyeonggi-do (KR); HAMMOND, Paula, Cambridge, MA 02139 (US); SHAOHORN, Yang, Cambridge, MA 02139 (US); AMANCHUKWU, Chibueze Vincent, Cambridge, MA 02139 (US)
(74) Representative: Elkington and Fife LLP

(56) References cited:
- EP-A1- 2 136 431
- FR-A1- 3 011 000
- GB-A- 1 042 719
- US-A1- 2009 214 956
- US-A1- 2014 106 240
- A. S. SHAPLOV ET AL: "Design and synthesis of new anionic "polymeric ionic liquids" with high charge delocalization", POLYMER CHEMISTRY, vol. 2, no. 11, 25 August 2011 (2011-08-25), page 2609, XP055363970, GB ISSN: 1759-9954, DOI: 10.1039/c1py00282a
- ASAKO NARITA ET AL: "Thermally stable ion conductive polymer composites containing imide-anion-type zwitterions", POLYMER BULLETIN, SPRINGER, BERLIN, DE, vol. 57, no. 1, 1 May 2006 (2006-05-01), pages 115-120, XP019334852, ISSN: 1436-2449, DOI: 10.1007/S00289-006-0528-0

## Description

### FIELD OF THE INVENTION

The present disclosure relates to an electrolyte for an alkali metal-air battery and an alkali metal-air battery including the electrolyte.

### BACKGROUND OF THE INVENTION

In general, there is a need for lithium-based, lithium-ion-based, or similar electrochemical batteries that exhibit high energy density over repetitive charge-discharge cycles. Electrochemical batteries having high energy density may be manufactured according to two methods as follows. The first method involves developing high energy materials, and the second method involves using lightweight materials.

For example, the first method involves providing anode and cathode materials that exhibit a high electrochemical potential difference. The first method typically requires the use of a lithium ion-containing electrolyte that is substantially electrochemically stable relative to both an anode and a cathode. In addition, the first method involves forming an ionically conductive layer that allows an appropriate electrochemical reaction without an unwanted side reaction. The electrolyte may be optionally provided in the form of one of a catholyte, which can be considered a cathode material and/or an electrolyte material.

As described above, the second method to achieve high energy density involves providing lightweight electrode materials. The large free energy of the reaction between lithium metal and air has attracted the interest of battery researchers for several decades. Both lithium metal and air are considered lightweight materials. At a nominal potential of about 3 volts (V), the theoretical specific energy for a Li/O₂ battery in a non-aqueous electrolyte is 11,000 Wh/kg or more for the reaction forming Li₂O₂. Such a battery rivals the energy density for hydrocarbon fuel batteries. It has been suggested that rechargeable Li/Air cells and batteries can be commercially viable, so long as lithium-containing anodes are protected in a manner to ensure that moisture in air does not directly contact the lithium therein.

In short, there is a need to provide novel and nonobvious materials to address the above-described technical problems. There is also a great need to provide an electrochemical battery that meets the long-felt need for stable and high-performance electrochemical batteries.

GB1,042,719 discloses a process for the preparation of macromolecular compounds containing sulpho groups.

Electrolytes for a metal air battery such as lithium air batteries are proposed by US 2014/0106240.

Other polymers for use in lithium batteries are proposed by FR 3 011 000.

### SUMMARY OF THE INVENTION

According to the present invention, a lithium-air battery as defined in claim 1 is provided.

### BRIEF DESCRIPTION OF THE DRAWINGS

This invention will become apparent and more readily appreciated from the following description of the embodiments, taken in conjunction with the accompanying drawings in which:
FIG. 1 is a schematic diagram of a lithium air battery according to an embodiment;
FIG. 2 is a schematic diagram of a lithium air battery according to another embodiment;
FIGS. 3A and 3B each show a graph of the results obtained before and after evaluating the reactivity of polyacrylate of an electrolyte and a discharge product, lithium oxide (Li₂O₂), in a lithium air battery prepared according to Example 4; and
FIGS. 4A and 4B each show a graph of the results obtained before and after evaluating the reactivity of a compound according to an embodiment and a discharge product, lithium oxide (Li₂O₂).

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Reference will now be made in detail to embodiments of an electrochemical battery such as an alkali metal-air battery or a secondary battery and its preparation method, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. Expressions such as "at least one of," when preceding a list of elements, modify the entire list of elements and do not modify the individual elements of the list.

Provided there is an electrochemical battery including a stable polyacrylate electrolyte compound that is useful in the field of energy savings, such as a battery based on Li-O₂ electrochemistry.

The electrochemical battery according to an embodiment may include a chemical compound having a novel chemical formula. Such a chemical compound may include a moiety related to a lithium ion, and accordingly may be involved in interactions with anions and/or in electrical potential fields.

Unless specifically defined, the electrochemical battery according to an embodiment, an alkali metal-air battery, and a secondary battery are not limited to any particular cells, batteries, electrically powered devices, or the like, but can be used for various applications. For example, numerous electrochemical cell configurations may be used to form embodiments described herein. The terminology used in the present specification is used for the purpose of describing particular embodiments only, and is not interrelated in a limited manner. Reference numbers used in the present specification and in the claims are defined to have the following meanings.

As used herein, the singular forms "a," "an," and "the" include both singular and plural referents, unless the context clearly dictates otherwise. Thus, for example, reference to "a battery comprising a cell" includes one or more batteries that include a polarity of cells as well as a single battery consisting of a single cell. In addition, reference to "a compound" includes both a single compound and a combination of compounds.

The term "and/or" when used in a list of items, refers to any of the items singly or in combination, unless the context clearly dictates otherwise. For example, "Z1, Z2 and/or Z3" refers to "Z1," "Z2," "Z3," "Z1 and Z2," "Z1 and Z3," "Z2 and Z3," or "Z1, Z2, and Z3," or any permutations of the foregoing.

The terms "anode" and "cathode" are interchangeably used with the terms "negative electrode" and "positive electrode," respectively.

The terms "electronic," "electronically", and the like are used in their ordinary sense, and relate to structures, e.g., semiconductor microstructures, that provide controlled conduction of electrons, holes, or other charge carriers.

The term "electrolyte" used herein refers to a material through which ions may migrate under an electric potential gradient, diffusion forces, and/or the like. Electrolytes may be solid, liquid, and/or gaseous. Typically, an electrolyte exhibits high ionic conductivity and low electronic conductivity.

The term "moiety" is used in its ordinary chemical sense, and refers to a part or functional group of a molecule. Similarly, the terms "substituted," "unsubstituted," "methylene," "X₂," "X₄," "X," " "independently selected," "C₁-C₁₀," "alkylene," "arylene," "hetero," "R₁," "R₂," "Li," "H," and the like are interpreted in their ordinary chemical sense.

The terms "substantial" and "substantially" are used in their ordinary sense and mean "of considerable importance" or "to a great or significant extent," but trivial or insignificant counterexamples may be found. For example, a "substantially solid-state" battery is to be interpreted to mean a battery including entirely or essentially consisting of solid components, but the battery does not have to exclude components that are entirely devoid of fluids as long as the operation of the battery is not hindered.

In addition, a "substantially stable compound" for use in an electrochemical battery refers to a compound that is considered stable electrochemically and/or chemically stable given the electrochemistry within the battery under ordinary circumstances, but the compound does not have to be completely stable when exposed to abusive or unintended operational conditions.

The term "solution" is used in its chemical sense, and refers to one or more solutes in a solvent. A solution may be fluid or solid in nature. For example, a solid-state solution differs from a solid-state compound in that the crystal structure of the solvent remains unchanged by addition of the solutes and that the solution may remain in a single homogeneous phase.

The term "stable," as in a "stable compound," is generally used in its chemical and/or electrochemical sense, and refers to something, e.g., a compound, that is not likely to change, fail, or undergo an undesirable chemical change that renders the invention completely inoperative.

The anode, the cathode, and the electrolyte may be located within a cell container. Depending on the desired chemistry, the cell container may be sealed, or may be at least permeable to a certain material and may not be permeable to other electrochemical reactants. For example, for the lithium-air battery of the invention, the cell container may be constructed to ensure that potentially undesired compounds, such as water, do not generate uncontrolled hydrogen gas.

An electrolyte including a compound including a first repeating unit represented by Formula 1a and a second repeating unit represented by Formula 1b may be provided: 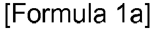 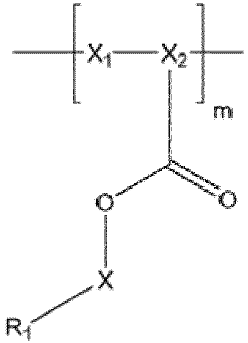 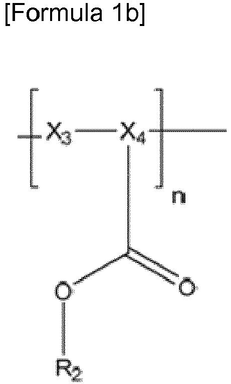 wherein, in Formulae 1a and 1b, R₁ may be a group selected from groups represented by Formulae 2 and 3, 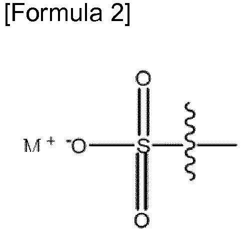 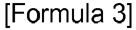 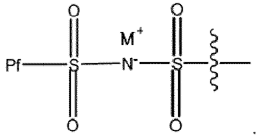
X₁ and X₃ may each be independently an unsubstituted methylene moiety,
X₂ and X₄ may each be independently a substituted or unsubstituted methylene moiety,
X indicates a bond, or may be a substituted or unsubstituted C₁-C₂₀ alkylene moiety, a substituted or unsubstituted C₆-C₂₀ arylene moiety, or a substituted or unsubstituted C₁-C₂₀ heteroarylene moiety,
Pf may be fluorine, a substituted or unsubstituted C₁-C₁₀ alkyl moiety, a substituted or unsubstituted C₆-C₁₀ aryl moiety, or a substituted or unsubstituted C₁-C₁₀ heteroaryl moiety,
R₂ may be lithium (Li), hydrogen (H), a substituted or unsubstituted C₁-C₃₀ alkyl moiety, a C₁-C₃₀ heteroalkyl moiety, or a substituted or unsubstituted C₆-C₃₀ aryl moiety,
M may be an alkali metal, and
0<m≤1, 0≤n≤1, and the sum m and n is 1.

According to the invention, the lithium-air battery comprises an electrolyte comprising a compound including the first repeating unit of Formula 1a and the second repeating unit of Formula 1b may be represented by Formula 1: 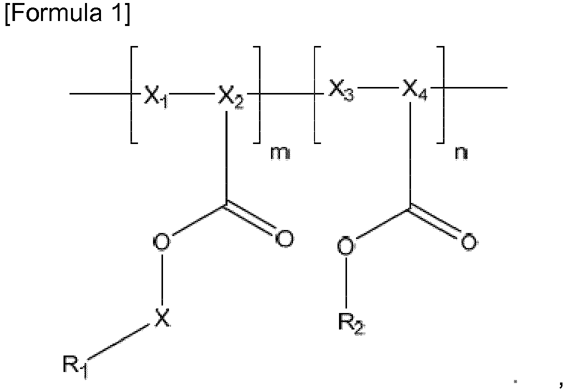 wherein, in Formula 1, R₁ is a group selected from groups represented by Formulae 2 and 3, 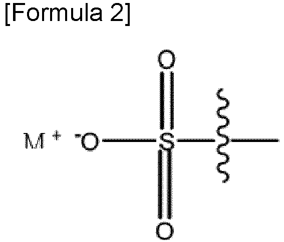 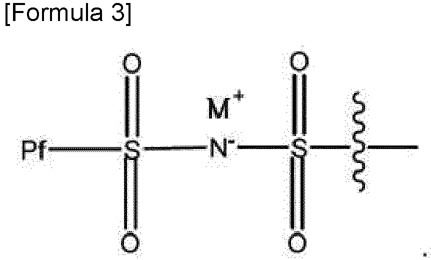
X₁ and X₃ are each independently a unsubstituted methylene moiety,
X₂ and X₄ are each independently selected from -CH, -CF, -C(CH₃), - C(CH₂CH₃), -C(CF₂CF₃), and -C(CF₃),
X is a substituted or unsubstituted C₁-C₂₀ alkylene moiety, a substituted or unsubstituted C₆-C₂₀ arylene moiety, or a substituted or unsubstituted C₁-C₂₀ heteroarylene moiety,
Pf is fluorine, a C₁-C₁₀ alkyl moiety, or a fluorinated C₁-C₁₀ alkyl moiety or a substituted or unsubstituted C₁ - C₁₀ heteroaryl moiety,
R₂ is a substituted or unsubstituted C₁-C₃₀ alkyl moiety, a C₁-C₃₀ heteroalkyl moiety, or a substituted or unsubstituted C₆-C₃₀ aryl moiety,
M is lithium, and
0< m≤1, 0≤n≤1, and the sum of m and n is 1.

In Formula 1, m and n each denote a mole fraction of the first repeating unit and the second repeating unit.

The compound of Formula 1 may be chemically and/or electrochemically stable.

In Formula 1, Pf may include a C₁-C₁₀ fluoroalkyl moiety or a C₁-C₁₀ perfluoroalkyl moiety.

The compound of Formula 1 may have a weight-average molecular weight in a range of about 1,000 g/mol to about 1,000,000 g/mol.

When the compound of Formula 1 is an oligomer or a polymer, the degree of polymerization may be in a range of about 6 to about 6,000.

The compound of Formula 1 has a structure in which oxygen (O) is positioned next to a carbonyl group (-C=O), and thus compared to a structure in which a group (e.g., CF₂) other than O is present, a carbon atom of the carbonyl group exhibits a relatively strong characteristic relative to a nucleophilic substitution reaction. Consequently, the compound of Formula 1 is found to have improved stability compared to a compound including a CF₂ group positioned next to the carbonyl group.

The presence of a bond X in Formula 1 may facilitate the migration of lithium ion-conductive groups, such as the groups represented by Formulae 2 and 3, thereby improving conductivity of lithium ions of the electrolyte. Alternatively, X may be a linker. In addition, the presence of the bond or the linker X may facilitate the introduction of the groups represented by Formulae 2 and 3 to the compound of Formula 1, thereby preparing the compound of Formula 1 without difficulty.

The linker X may be, for example, an unsubstituted C₁-C₁₀ alkylene moiety, an unsubstituted C₆-C₁₀ arylene moiety, or an unsubstituted C₁-C₁₀ heteroarylene moiety, and examples thereof may include a methylene, an ethylene, a propylene, a butylene, a pentylene, a hexylene, a phenylene, and a biphenylene.

In Formula 1, a substituent of the substituted methylene moiety, the substituted C₁-C₁₀ alkylene moiety, the substituted C₆-C₁₀ arylene moiety, and the substituted C₁-C₁₀ heteroarylene moiety may be a halogen atom, a C₁-C₂₀ alkyl group substituted with a halogen atom (e.g., CCF₃, CHCF₂, CH₂F, or CCl₃), a C₁-C₂₀ alkoxy group, a C₂-C₂₀ alkoxyalkyl group, a hydroxyl group, a nitrogen group, a cyano group, an amino group, an amidino group, a hydrazine group, a hydrazone group, a carboxyl group or a salt thereof, a sulfonyl group, a sulfamoyl group, sulfonic acid or a salt thereof, phosphoric acid or a salt thereof, a C₁-C₂₀ alkyl group, a C₂-C₂₀ alkenyl group, a C₂-C₂₀ alkynyl group, a C₁-C₂₀ heteroalkyl group, a C₆-C₂₀ aryl group, a C₆-C₂₀ arylalkyl group, a C₆-C₂₀ heteroaryl group, a C₇-C₂₀ heteroarylalkyl group, a C₆-C₂₀ heteroaryloxy group, a C₆-C₂₀ heteroaryloxyalkyl group, or a C₆-C₂₀ heteroarylalkyl group.

Examples of the alkylene moiety may include a methylene, an ethylene, a propylene, a butylene, an isobutylene, and a pentylene.

Examples of the arylene moiety may include a phenylene, a naphthylene, and a tetrahydronaphthylene. In addition, the heteroarylene moiety may refer to a group of which a heteroaromatic ring is optionally fused with at least one aryl, cyclyaliphatic, or heterocyclic group, and examples of the heteroarylene moiety may include at least one of a thienyl group, a furylene group, a pyrrolylene group, an imidazolylene group, a thiazolylene group, an isothioazolylene group, an indolylene group, an isoindolylene group, an indazolylene group, an indolizinylene group, a purinylene group, a quinolizinylene group, a quinolinylene group, and an isoquinolinylene group.

Examples of the halogen atom may include fluorine, bromium, chlorine, and iodine.

The groups represented by Formulae 2 and 3 may each represented by, for example, Formulae 2a and 3a: 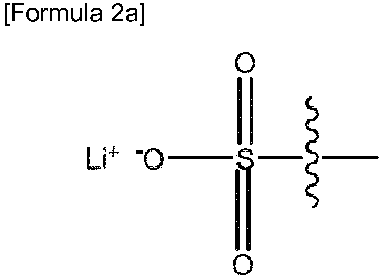 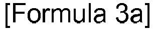 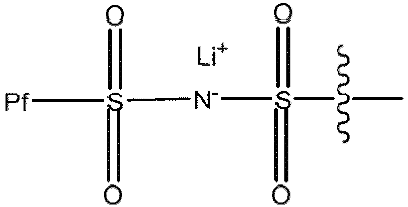 wherein, in Formula 3a, Pf may be a C₁-C₁₀ alkyl moiety.

The compound of Formula 1 is a copolymer. The copolymer may include all embodiments of a block copolymer, a random copolymer, and an alternating copolymer.

In Formula 1, the linker X may be a methylene, an ethylene, a propylene, or a butylene.

In Formulae 1a and 1b, X₂ and X₄ may each be optionally selected from CH₂, CHF, and CF₂, and/or in Formula 3, Pf may be a C1-C10 fluoroalkyl moiety, such as a perfluoroalkyl moiety. In some embodiments, lithium ions (Li⁺) related to a polyacrylate compound may be substituted with H⁺, Na⁺, and/or K⁺ ions.

The electrolyte for the lithium air battery may be a carbonate-based organic electrolyte, such as ethylene carbonate or propylene carbonate. However, such an organic electrolyte may leak fluid, and thus there may be a safety issue. To solve such a problem, a polyethylene oxide-based electrolyte, which is a solid electrolyte, has been suggested.

However, when the polyethylene oxide-based electrolyte is used as the electrolyte for the lithium air battery, the polyethylene oxide-based electrolyte may be degraded by a discharge product, lithium oxide (Li₂O₂), in a lithium air battery, thereby degrading cycle characteristics of the lithium air battery.

In addition, when the lithium air battery is operated at a high voltage, the polyethylene oxide-based electrolyte may form radicals by using oxygen supplied from the cathode, and accordingly, the polyethylene oxide may be oxidized, the resultant may be dissociated upon the oxidation, and byproducts, such as carbon monoxide, may be produced. In this regard, the lifespan of the lithium air battery may be reduced. Therefore, there is a need for an electrolyte that is stable and has excellent mechanical characteristics at a high voltage.

In the lithium air battery according to the invention, the electrolyte includes the compound of Formula 1, and thus the lithium air battery may be stable at a high voltage, and furthermore, may not be degraded by a byproduct, Li₂O₂, thereby significantly improving stability and having excellent mechanical characteristics.

The compound of Formula 1 may be a polymer having a stable backbone, and may include the group represented by one of Formulae 2 and 3 at a terminus of the backbone, thereby having excellent ion conductivity. Such structural characteristics may contribute to excellent stability against the discharge product, Li₂O₂.

The compound of Formula 1 may be selected from groups represented by Formulae 4 to 9. In Formulae 4 to 9, m and n each denote a mole fraction: 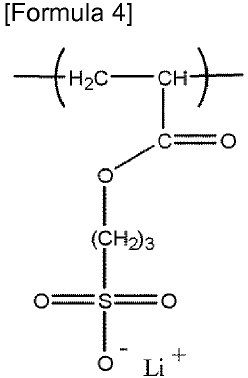 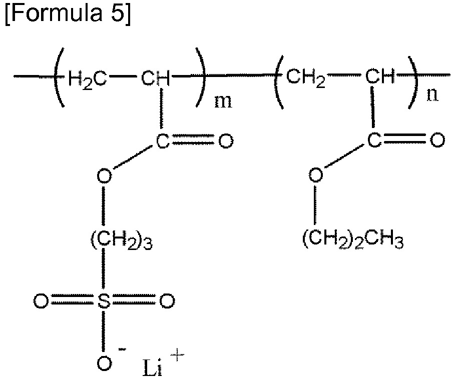 wherein, in Formula 5, m and n may each independently be in a range of about 0.01 to about 0.99, and the sum of m and n is 1, 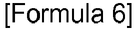 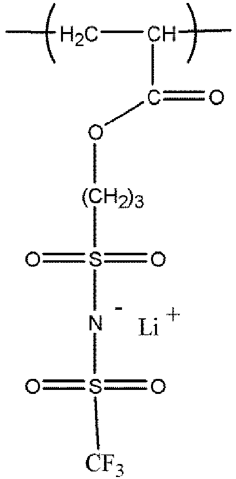 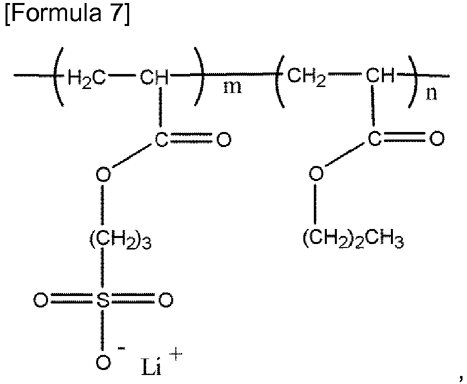 in Formula 7, m and n may each be independently in a range of about 0.01 to about 0.99, and the sum of m and n is 1, and 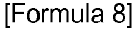 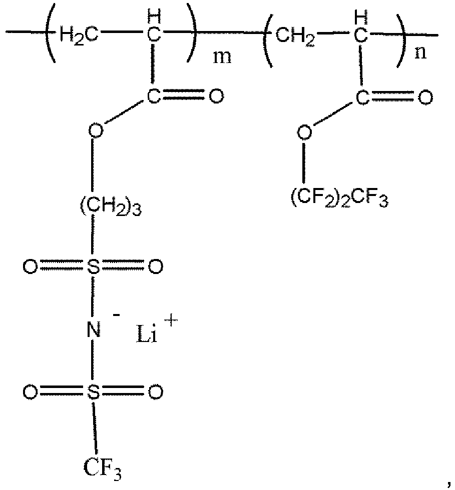 in Formula 8, m and n may each be independently in a range of about 0.01 to about 0.99, and the sum of m and n is 1,

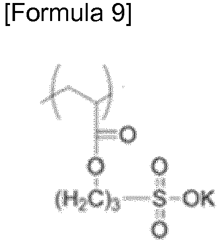

The compound of Formula 1 may be represented by Formula 10: 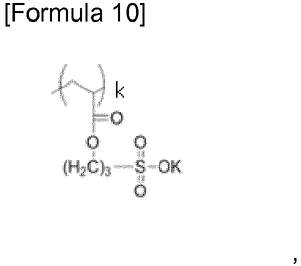 wherein, in Formula 10, k denotes a degree of polymerization, and may be in a range of about 6 to about 6,000.

A weight-average molecular weight of the compound of Formula 10 may be in a range of about 1,000 g/mol to about 1,000,000 g/mol.

In Formulae 5, 7, and 8, m may be, for example, in a range of about 0.5 to about 0.9, and n may be, for example, 0.1 to about 0.5.

The compounds of Formulae 4 to 9 may each have, for example, a degree of polymerization in a range of about 6 to about 6,000, and a weight-average molecular weight in a range of about 1,000 g/mol to about 1,000,000 g/mol.

The compounds may be located within the cell container. For example, the compounds may be located in the electrolyte, and that is, the compounds of Formula 1 may be located at an interface between the anode and the electrolyte and/or at an interface between the cathode and the electrolyte.

In some embodiments, an interfacial layer including the compound including the first repeating unit represented by Formula 1a and the second repeating unit represented by Formula 1b may be disposed on at least one electrode surface selected from the cathode and the anode. Here, the interfacial layer may be formed by using various methods. The interfacial layer may be, for example, formed upon charging and/or discharging of the battery. In some embodiments, the interfacial layer may be formed upon assembling of the battery and/or upon filling of the cell container.

In some embodiments, different anode materials may be used. For example, the anode may include carbon, optionally in a layered form, e.g. as a mesophase or graphitic carbon. In some embodiments, the anode may include a metallic material, e.g., metallic Li. The anode materials may be capable of reversible Li insertion and/or intercalation.

The electrolyte may include a fluid phase including a salt in solution. The fluid phase is more typically substantially aprotic, but an electrolyte material, such as polyethylene oxide (PEO, also known as "polyethylene glycol having a terminal hydroxyl group from which H ions may be liberated) may be sparingly used.

In some embodiments, the fluide phase may typically contain a salt or a salt-like moiety that easily dissociates cations, such as H, Li, Na and/or K. In some embodiments, the electrolyte may optionally or additionally be solid, liquid, or gel.

In some embodiments, a ceramic electrolyte may be used.

The electrolyte may include the ion-conductive polyacrylate material described above, wherein the ion-conductive polyacrylate material may not exhibit high electronic conductivity as described above.

The electrolyte according to an embodiment may be prepared as follows.

The electrolyte may be prepared by adding a lithium salt and a solvent to the compound including the first repeating unit represented by Formula 1a and the second repeating unit represented by Formula 1b, for example, the compound of Formula 1.

An amount of the compound including the first repeating unit represented by Formula 1a and the second repeating unit represented by Formula 1b included in the electrolyte according to an embodiment may be in a range of about 1 to about 100 parts by weight, for example, about 30 to about 90 parts by weight, based on 100 parts by weight of the total weight of the electrolyte. When the amount of the compound of Formula 1 is within this range, the electrolyte having improved stability may be prepared.

The lithium salt may be dissolved in an organic solvent to serve as a source of lithium ions in a battery. The lithium salt may include at least one selected from LiPF₆, LiBF₄, LiSbF₆, LiASF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+1}SO₂) (where x and y are each a natural number), LiF, LiBr, LiCI, LiOH, Lil, LiB(C₂O₄)₂ (lithium bis(oxalato) borate, LiBOB), Li(FSO₂)₂N, Li(CF₃SO₂)₂N, Li(C₂F₅SO₂)₂N, LiN(CₚF₂ₚ₊₁SO₂)(C_{q}F_{2q+1}SO₂) (where p and q are different from each other and p and q are each independently an integer selected from 1 to 20), LiN((SO₂)₂CₚF₂ₚ) (where p is an integer selected from 1 to 10), Li(C₆F₅SO₂)₂N, Li(C₁₀F₇SO₂)₂N, Li(C₆F₅SO₂)(C₁₀F₇SO₂)N, LiN(C₆F₅SO₂)(CₚF₂ₚ₊₁SO₂) (where p is an integer selected from 1 to 10), and LiN(C₁₀F₇SO₂)(CₚF₂ₚ₊₁SO₂) (where p is an integer selected from 1 to 10).

An amount of the lithium ion may be in a range of about 0.01 M to about 10 M, for example, about 0.1 M to about 2.0 M. When the amount of the lithium ion is within this range, the electrolyte may have appropriate conductivity and viscosity, and exhibit excellent electrolytic performance and facilitate the movement of lithium ions.

The electrolyte may further include a metallic salt other than the lithium salt, and examples of the metallic salt may include AlCl₃, MgCl₂, NaCl, KCI, NaBr, KBr, and CaCl₂.

The electrolyte may further include a non-aqueous organic solvent, and examples thereof may include a carbonate-based solvent, an ester-based solvent, an ether-based solvent, a ketone-based solvent, an amine-based solvent, and a phosphine-based solvent.

Examples of the carbonate-based solvent may include at least one of dimethyl carbonate (DMC), diethyl carbonate (DEC), ethylmethyl carbonate (EMC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC).

Examples of the ester-based solvent may include at least one of methyl acetate, ethyl acetate, n-propyl acetate, dimethyl acetate, methyl propionate, ethyl propionate, γ-butyrolactone, decanolide, valerolactone, mevalonolactone, and caprolactone.

Examples of the ether-based solvent may include at least one of dibutyl ether, tetraglyme, diglyme, dimethoxyethane, 2-methyltetrahydrofuran, and tetrahydrofuran. An example of the ketone-based solvent may include cyclohexanone.

Examples of the amine-based solvent may include triethyamine and triphenylamine. An example of the phosphine-based solvent may include triethylphosphine. However, embodiments are not limited thereto, and any non-aqueous solvent available in the art may be used.

In addition, as an aprotic solvent, nitrile, such as R-CN (where R is a C₂-C₃₀ linear, branched, or cyclic hydrocarbon group, and may include a double bond, an aromatic ring, or an ether bond), amide, such as dimethylformamide, or dioxolane-based sulfolane, such as 1,3-dioxolane, may be used.

The aprotic solvent may be used singly or in combination with at least one solvent, and in the latter case, a mixing ratio of solvents may be adjusted depending on the battery performance, and such adjustment may be easily performed by one of ordinary skill in the art.

Examples of the non-aqueous organic solvent may include methylbutyl ether, diethyl ether, ethylbutyl ether, dibutyl ether, polyethylene glycol dimethyl ether, and tetraethylene glycol dimethyl ether; cyclohexanone, and dioxane; dimethoxy ethane, 2-methyltetrahydrofuran, 2,2-dimethyltetrahydrofuran, 2,5-dimethyltetrahydrofuran, and tetrahydrofuran; methyl acetate, ethyl acetate, n-propyl acetate, dimethyl acetate, methylpropionate, and ethylpropionate; methyl or ethyl formate; dimethyl carbonate, diethyl carbonate, ethylmethyl carbonate, dipropyl carbonate, methylpropyl carbonate, ethylpropyl carbonate, ethylene carbonate, propylene carbonate, butylene carbonate, and polyethylene carbonate; γ-butyrolactone, decanolide, valerolactone, mevalonolactone, and caprolactone; digylme, triglyme, and tetraglyme; acetonitrile, benzonitrile, nitromethane, nitrobenzene, triethylamine, triphenylamine, and tetraethylene glycol diamine; dimethylformamide, diethylformamine, and N-methylpyrrolidone; dimethyl sulfone, tetramethylene sulfone, triethylphosphine oxide, 1,3-dioxolane, and sulfolane.

The alkali metal-air battery according to an embodiment may have an open circuit voltage of at least about 3.0 volts (V) when charged. However, higher or lower voltages may occur depending on the specific chemistry involved therein.

For example, a cathode material may include a substance other than O₂. For example, in the present disclosure, a cathode material, a solid electrolyte material, an electronically conductive material, and a binder may be used. A cathode active material suitable for a solid-state lithium battery may typically have high Li-conductivity and exhibit a relatively high voltage against metallic Li. In some embodiments, cathode materials may be ionically non-conductive, but may be also electronically conductive.

In the electrochemical battery according to an embodiment, microstructurally similar materials used in known Li-ion electrochemical batteries may be used. For example, as an electroactive cathode material, FeS₂, MnO₂, spinel LiMn₂O₄, LiCoO₂, or LiNiO₂ may be used. Examples of electronically conductive materials for use in the cathode may include acethylene black and graphitic materials.

A cathode active material layer may also include a binder. Examples of the binder may include fluorine-containing polymers, such as polytetrafluoroethylene (PTFE) and polyvinylidene fluoride (PVDF). Examples of current collector materials suitable for a cathode layer may include at least one of aluminum, iron, titanium, and carbon.

An anode layer may include an anode material, and in general, may include a solid electrolyte material, an electronically conductive material, and a binder material.

Non-limiting examples of the anode material may include metallic Li, alloys thereof, and metal active materials in combination with cathode active materials. Examples of the anode material may include metals, such as indium (In), aluminum (Al), silicon (Si), and tin (Sn). In some embodiments, the anode active material may include, for example, at least one selected from mesocarbon microbeads (MCMB), high orientation property graphite (HOPG), hard carbon, and soft carbon.

The electronically conductive material and the binder used for forming an anode active material layer may be the same as or similar to those in the cathode layer. Examples of current collector materials suitable for the anode may include copper, nickel, and carbon.

Although the electrochemical battery according to an embodiment relates to a room-temperature battery, embodiments may be used in elevated temperature environments, e.g., human body temperature or greater. It is apparent the liquid anode and cathode materials may be used as well.

Hereinafter, the lithium air battery according to an embodiment will be described in detail.

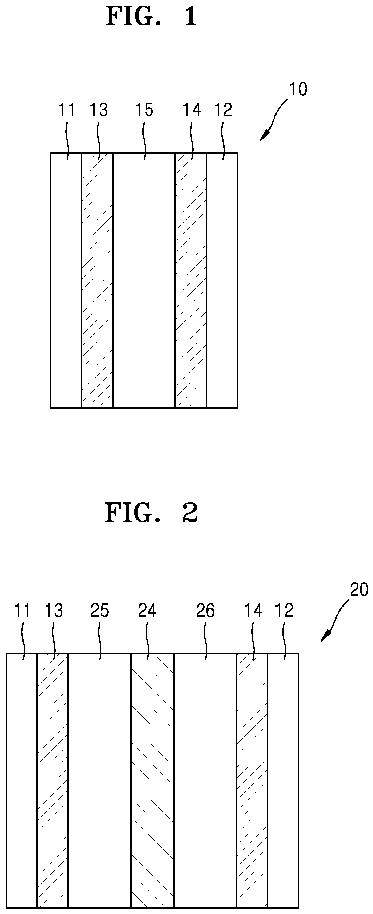

FIG. 1 is a schematic diagram of a lithium air battery 10 according to an embodiment. Referring to FIG. 1, the lithium air battery 10 includes a first current collector 11, a second current collector 12, a cathode 13, an anode 14, and an electrolyte (hereinafter, referred to as a first electrolyte) 15 between the cathode 13 and the anode 14, the first electrolyte 15 including the compound of Formula 1. The cathode 13 is formed on the first current collector 11, and a redox reaction of oxygen occurs therein by using oxygen as an active material. The anode 14 is formed on the second current collector 12, and a redox reaction of lithium metal occurs therein. The first electrolyte 15 may allow the conduction of lithium ions between the cathode 13 and the anode 14.

For rapid diffusion of oxygen, the first current collector 11 and the second current collector 12 may each have a porous structure, such as a net shape or a mesh shape. For example, as the first current collector 11 and the second current collector 12, a porous metallic plate formed of stainless steel, nickel, or aluminum may be used, but embodiments are not limited thereto. Any material available as a current collector in the related art may be used. In some embodiments, to prevent oxidation, the first current collector 11 and the second current collector 12 may be coated with oxidation-resistant metal or alloy.

A porous conductive material may be used as the cathode 13 that uses oxygen as a cathode active material. Thus, any material may be used as the cathode 13 without limitation, so long as the material has porosity and conductivity. For example, a carbon-based material having porosity may be used. Examples of the carbon-based material may include carbon black, graphite, graphene, active carbon, carbon nanotube, and carbon fiber. In addition, a metallic conductive material, such as metallic fiber and metallic mesh, may be used as the cathode 13. In some embodiments, metallic powder, such as silver, nickel, and aluminum, may be used as the cathode 13. In some embodiments, an organic conductive material, such as a polyphenylene derivative, may be used as the cathode 13. These conductive materials may be used singly or in combination.

The cathode 13 may include a catalyst to facilitate oxidation-reduction of oxygen. Such a catalyst may include a noble metal-based catalyst, such as platinum, gold, silver, palladium, ruthenium, rhodium, and osmium, an oxide-based catalyst, such as manganese oxide, iron oxide, cobalt oxide, and nickel oxide, or an organic metallic-based catalyst, such as cobalt phthalocyanine, but embodiments are not limited thereto. Any material available as a catalyst for oxidation-reduction of oxygen in the art may be used.

In some embodiments, the catalyst may be supported on a carrier. The carrier may include oxide, zeolite, clay minerals, or carbon. The oxide may include at least one selected from alumina, silica, zirconium oxide, and titanium dioxide. In some embodiments, the oxide may include at least one metal selected from cerium (Ce), praseodymium (Pr), samarium (Sm), europium (Eu), terbium (Tb), thulium (Tm), ytterbium (Yb), stibium (Sb), bismuth (Bi), vanadium (V), chromium (Cr), manganese (Mn), iron (Fe), cobalt (Co), nickel (Ni), copper (Cu), niobium (Nb), molybdenum (Mo), and tungsten (W). The carbon may include carbon black, such as Ketjen black, acetylene black, channel black, and lamp black; graphite, such as natural graphite, artificial graphite, and expanded graphite; active carbon; and carbon fiber, but embodiments are not limited thereto. Any material available as a carrier in the art may be used.

The cathode 13 may additionally include a binder. The binder may include a thermoplastic resin or a thermosetting resin. Examples of the binder may include polyethylene, polypropylene, PTFE, PVDF, styrene-butadiene rubber, tetrafluoroethylene-perfluoroalkylvinyleter copolymer, vinylidene fluoride-hexafluoropropylene copolymer, vinylidene fluoride-chlorotrifluoroethylene copolymer, ethylene-tetrafluoroethylene copolymer, polychlorotrifluoroethylene, vinylidene fluoride-pentafluoro propylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethylvinylether-tetrafluoro ethylene copolyer, and ethylene-acrylic acid copolymer, which may be used single or in combination, but embodiments are not limited thereto. Any material available as a binder in the art may be used.

The cathode 13 may be prepared as follows. The catalyst for oxidation-reduction of oxygen, the electronically conductive material, and the binder may be mixed together, and an appropriate solvent may be added thereto, to thereby prepare a cathode slurry. Then, a surface of the first current collector 11 may be coated with the cathode slurry, dried, and optionally compression-molded on the first current collector 11 so as to improve electrode density. The cathode 13 may optionally include lithium oxide. In some embodiments, the cathode 13 may optionally omit the catalyst for oxidation-reduction of oxygen.

The anode 14, e.g., an anode including lithium, may be an electrode including include a Li metal, a Li metal-based alloy, or a material capable of intercalating/deintercalating Li, but embodiments are not limited thereto. Any material available as an anode in the art may be used. The anode 14 may be, for example, a lithium metal thin film. The Li metal-based alloy may include, for example, lithium metal, such as Al, Sn, magnesium (Mg), In, calcium (Ca), titanium (Ti), and V.

The porous cathode 13 may be partially or entirely impregnated with the. first electrolyte 15.

In addition, although not shown in FIG. 1, a separator may be disposed between the cathode 13 and the anode 14. As the separator, any composition that withstands the range of use of the lithium air battery may be used without limitation, and examples thereof may include a non-woven polymer, such as a polypropylene non-woven polymer or a polyphenylene sulfide non-woven polymer; and a porous film formed of an olefin-based resin, such as polyethylene or polypropylene, wherein at least two materials may be used in combination.

FIG. 2 is a schematic diagram of a lithium air battery 20 according to another embodiment.

Referring to FIG. 2, the lithium air battery 20 may include the first current collector 11, the second current collector 12, the cathode 13, the anode 14, an lithium ion-conductive layer 24 between the cathode 13 and the anode 14, an electrolyte (hereinafter, referred to as a first electrolyte) 25 between the cathode 13 and the lithium ion-conductive layer 24, the first electrolyte 25 including the compound of Formula 1, and a second electrolyte 26 between the anode 14 and the lithium ion-conductive layer 24.

In FIG. 2, the anode 14, the second electrolyte 26, and the lithium ion-conductive layer 24 may be collectively termed as a protective anode. The cathode 13, the anode 14, and the first electrolyte 25 in FIG. 2 may correspond to the cathode 13, the anode 14, and the first electrolyte 15 in FIG. 1, respectively, and thus detailed descriptions thereof will be omitted.

The lithium ion-conductive layer 24 may exhibit the conductivity of lithium ions and include ion-conductive inorganic particles.

The ion-conductive inorganic particles may include at least one selected from a glassy active metallic ion conductor, an amorphous active metallic ion conductor, a ceramic active metallic ion conductor, and a glass-ceramic active metallic ion conductor, or a combination of these examples.

The ion-conductive inorganic particles may include at least one selected from Li_{1+x+y}AlₓTi₂₋ₓSi_{y}P_{3-y}O₁₂ (0<x<2 and 0≤y<3), BaTiO₃, Pb(Zr,Ti)O₃(PZT), Pb₁₋ₓLaₓZr_{1-y} Ti_{y}O₃(PLZT) (where O≤x<1 and O≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, SiC, lithium phosphate (Li₃PO₄), lithium titanium phosphate (LiₓTi_{y}(PO₄)₃) (where 0<x<2 and 0<y<3), lithium aluminum titanium phosphate (LiₓAl_{y}Ti_{z}(PO₄)₃) (where 0<x<2, 0<y<1, and 0<z<3), Li_{1+x+y}(Al, Ga)ₓ(Ti, Ge)₂₋ₓSi_{y}P_{3-y}O₁₂ (where O≤x≤1 and O≤y≤1), lithium lanthanum titanate (LiₓLa_{y}TiO₃) (where 0<x<2 and 0<y<3), lithium germanium thiophosphate (LixGeyPzSw) (where 0<x<4, 0<y<1, 0<z<1, and 0<w<5), lithium nitride (LiₓN_{y}) (where 0<x<4 and 0<y<2), SiS₂(LiₓSi_{y}S_{z})-based glass (where 0<x<3, 0<y<2, and 0<z<4), P₂S₅(LiₓP_{y}S_{z})-based glass (where 0<x<3, 0<y<3, and 0<z<7), Li₂O, LiF, LiOH, Li₂CO₃, LiAlO₂, Li₂O-Al₂O₃-SiO₂-P₂O₅-TiO₂-GeO₂-based ceramics, and Garnet-based ceramics (Li₃₊ₓLa₃M₂O₁₂) (where 0≤x≤5 and M may be tellurium (Te), Nb, or zirconium (Zr)), or a combination of these examples.

Non-limiting examples of the second electrolyte 26 may include at least one of a solid polymer electrolyte and an inorganic solid electrolyte. Examples of the inorganic solid electrolyte may include at least one of Cu₃N, Li₃N, and LiPON.

As the second electrolyte 26, a lithium ion-conductive solid electrolyte membrane may be used.

The lithium ion-conductive solid electrolyte membrane may include a glass-ceramic solid electrolyte or a stacked structure of a glass-ceramic solid electrolyte and a solid polymer electrolyte. The glass-ceramics refer to a polycrystalline material produced by controlled crystallization of base glass.

The lithium ion-conductive solid electrolyte membrane may include an inorganic material including lithium ion-conductive glass, lithium ion-conductive crystal (ceramic or glass-ceramic), or a combination thereof. In consideration of chemical stability, the lithium ion-conductive solid electrolyte membrane may include, for example, oxide.

The lithium ion-conductive solid electrolyte membrane may further include a solid polymer electrolyte in addition to the glass-ceramic substances. As such, the solid polymer electrolyte may be polyethyleneoxide doped with a lithium salt, and examples of the lithium salt may include LiN(SO₂CF₂CF3)₂, LiBF₄, LiPF₆, LiSbF₆, LiAsF₆, LiClO₄, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, and LiAlCl₄.

The solid polymer electrolyte may have a stacked structure of the glass-ceramic substances, wherein the glass-ceramic substance may be disposed between a first solid polymer electrolyte and a second solid polymer electrolyte that include the glass-ceramic substances.

The lithium ion-conductive solid electrolyte membrane may be used as a single layer or a multi-layer.

It is to be understood that, while the present inventive concept has been described in conjunction with the embodiments thereof, the foregoing description merely illustrates and does not limit the scope of the present inventive concept. The above-identified polyacrylate polymer was tested with respect to K+ ions because neither K nor Li affects the stability of a polyacylate structure. In addition, the present inventive concept may be used to avoid detrimental dendritic growth. Furthermore, when a numerical range is recited, the range is to be interpreted to as if every number within the numerical range is individually recited. Other aspects, advantages, and modifications within the scope of the invention will be apparent to those skilled in the art to which the invention pertains.

Hereinafter, some embodiments are suggested as examples, which are not intended to limit the scope of the present invention as defined by the description and the claims of the present application.

### Example 1: Preparation of an electrolyte

0.15 g of lithium bis(trifluoromethylsulfonyl)imide (LiTFSI) was added to 1 g of the compound of Formula 4, thereby preparing an electrolyte. Here, an amount of the compound of Formula 4 was about 90 parts by weight based on the total weight of the electrolyte, a weight-average molecular weight of the compound of Formula 4 was about 230, and a degree of polymerization of the compound of Formula 4 was about 2000:

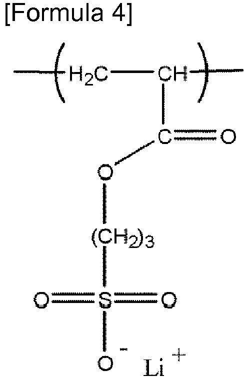

### Example 2: Preparation of an electrolyte

An electrolyte was prepared in the same manner as in Example 1, except that the amount of the compound of Formula 4 was changed to about 30 parts by weight based on the total weight of the electrolyte.

### Example 3: Preparation of an electrolyte

An electrolyte was prepared in the same manner as in Example 1, except that the compound of Formula 5 was used instead of the compound of Formula 4:

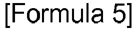

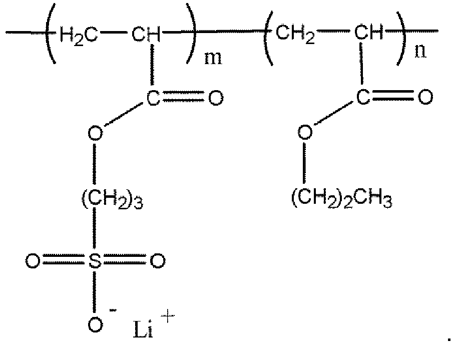

In Formula 5, m was 0.6, and n was 0.4. Here, m and n each denote a mole fraction, and the sum of m and n is 1.

The compound of Formula 5 had a weight-average molecular weight of about 180 and a degree of polymerization of about 2,000.

### Comparative Example 1: Preparation of an electrolyte

An electrolyte was prepared in the same manner as in Example 1, except that polyethylene oxide was used instead of the compound of Formula 4.

### Example 4: Preparation of a lithium air battery

40 parts by weight of Super P carbon, 10 parts by weight of polytetrafluoroethylene(PTFE), and 50 parts by weight of N-methylpyrrolidone (NMP) were mixed together, thereby preparing a cathode slurry. The cathode slurry was coated and compressed, and a laminated cathode sheet was obtained therefrom. The laminated cathode sheet was compressed on a stainless mesh, and then, placed in an oven for vacuum drying at a temperature of 100°C for 120 minutes, thereby obtaining a cathode.

The middle of an Al film (polypropylene-coated aluminum film having a thickness of 200 µm) having a size of 5 cm x 5 cm was punched to a size of 1 cm x 1 cm. Then, by using glue, an LATP film having a size of 1.4 cm x 1.4 cm (Li_{1+x+y}AlₓTi₂-ₓSi_{y}P_{3-y}O₁₂ (where 0≤x≤2, 0≤y≤3, a thickness of 150 µm, manufactured by Ohara corporation) was used to plug up the hole, thereby preparing a first Al film that partially included the LATP film. Next, an Al pouch-type protected lithium anode was obtained by laminating a new second Al film having a size of 5 cm x 5 cm, a copper current collector (having a thickness of 20 µm), a lithium foil (having a size of 1.4 cm x 1.4 cm and a thickness of 100 µm), a polyprophylene separator (Celgard-3501 having a thickness of 25 µm, manufactured by Celgard) impregnated with the electrolyte solution of Example 1 including 1M LiTFSI, and the first Al film, in the stated order, followed by vacuum-heating for adhesion.

The protected lithium anode was placed in a stainless case, and then, on a side facing the anode, a cathode, in which a polyprophylene separator (Celgard-3501 having a thickness of 25 µm, manufactured by Celgard) was disposed, was placed. Next, the electrolyte prepared in Example 1 was injected between the cathode and the anode, and on the cathode, a porous gas diffusion layer formed of carbon fibers and a foaming nickel plate was disposed. Then, a press membrane that allows the delivery of air to the anode was used to compress nickel plate, thereby preparing a lithium air battery.

### Examples 5-6: Preparation of a lithium air battery

Lithium air batteries were prepared in the same manner as in Example 4, except that the electrolytes of Examples 2 and 3 were each used instead of the electrolyte of Example 1.

### Comparative Example 2: Preparation of a lithium air battery

A lithium air battery was prepared in the same manner as in Example 4, except that the electrolyte of Comparative Example 1 was used instead of the electrolyte of Example 1.

### Evaluation Example 1: Evaluation of stability

In a Glovebox filled with argon (Ar) gas, 4 ml of DMF was added to a 20 ml container, and 132 mg of the compound of Formula 10 was added thereto to be dispersed in DMF. 85 mg of lithium oxide (Li₂O₂) was added to the container, and the container was mixed well at room temperature for 5 days, and then, stored. Afterwards, a sample of the mixture was collected, and DMF was evaporated therefrom. Then, the resulting sample was subjected to FT-IR analysis, thereby evaluating the stability of the compound of Formula 10 with respect to lithium oxide: 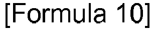 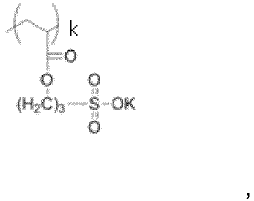 wherein, in Formula 10, k denotes a degree of polymerization, which was about 2,000.

The compound of Formula 10 was obtained by performing a radical polymerization reaction of a compound represented by Formula 11 (3-sulfopropyl acrylate potassium salt):

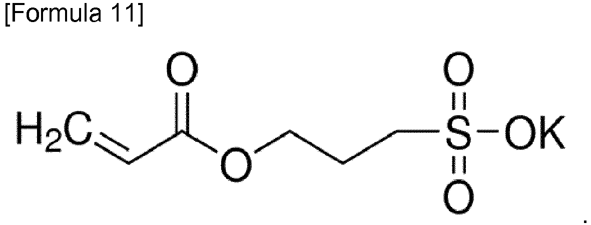

To compare the stability of the compound of Formula 10 with respect to lithium oxide, polyethylene oxide used in Comparative Example 1 was subjected to the test below.

In a Glovebox filled with Ar gas, 4 ml of DMF was added to a 20 ml container, and 132 mg of polyethylene oxide (PEO) was added thereto to be dispersed in DMF. Then, 85 mg of Li₂O₂ was added to the resulting dispersions, and the container was stored at room temperature (25°C) for 5 days for addition and mixing of materials. Afterwards, a sample of the mixture was collected, and DMF was evaporated therefrom. Then, the resulting sample was subjected to FT-IR analysis, thereby evaluating the stability of polyethylene oxide with respect to lithium oxide.

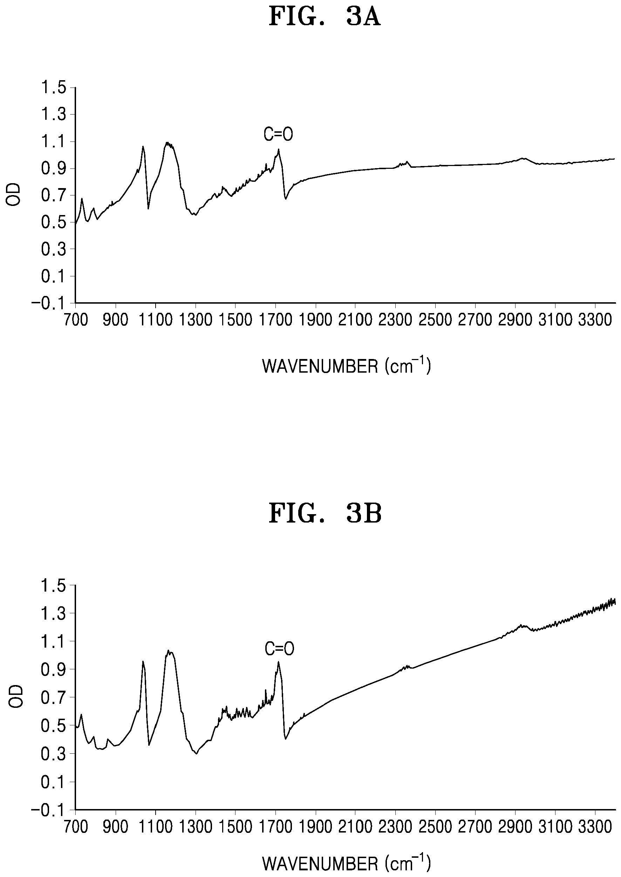

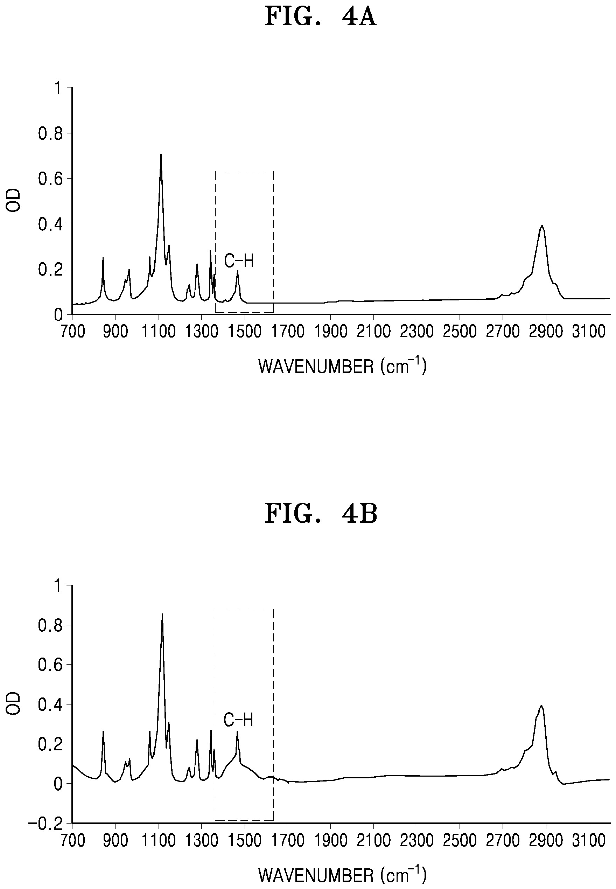

The results of evaluating the stability of the compound of Formula 10 are shown in FIGS. 3A and 3B. In addition, the results of evaluating the stability of PEO are shown in FIGS. 4A and 4B. In FIGS. 3A, 3B, 4A, and 4B, OD denotes optical density.

As shown in FIGS. 3A and 3B, it was confirmed that the compound of Formula 10 was stable against Li₂O₂ since a C=O bond, which is the weakest bond in the structure of the compound of Formula 10, remained in that state without being dissociated after the direct reaction with Li₂O₂. However, as shown in FIGS. 4A and 4B, it was confirmed that PEO was unstable against Li₂O₂ since a C-H bond in the structure of PEO was decomposed.

The results of evaluating the stability of the lithium air battery prepared in Example 4 are shown in FIGS. 3A and 3B. In addition, the results of evaluating the stability of the lithium air battery prepared in Comparative Example 2 are shown in FIGS. 4A and 4B.

### Evaluation Example 2: Mechanical characteristics

Tensile/elastic strength and elongation of the electrolytes of Example 1 and Comparative Example 1 were evaluated.

As a result, it was confirmed that the electrolyte of Example 1 exhibited improved tensile/elastic strength and elongation as compared to those of the electrolyte of Comparative Example 1.

### Evaluation Example 3: Charge-discharge characteristics

The lithium air batteries prepared in Example 4 and Comparative Example 2 were placed in a chamber filled with 1 atm of oxygen at a temperature of 25°C, and then, were each discharged with a constant current of 0.2 mA/cm² at a temperature 60°C until a voltage thereof reached 2 V (vs. Li), followed by being each charged with the same current until a voltage thereof reached 4.0 V. Such a charge-discharge cycle was repeatedly performed for 52 times in total.

The lithium air batteries prepared in Example 4 and Comparative Example 2 were subjected to the charge-discharge test. Here, the specific capacity of the battery was defined as discharge capacity per total weight of the cathode.

Consequently, it was observed that peaks related to the formation of decomposition products appeared from the 10^{th} cycle of the lithium air battery prepared in Comparative Example 2. It was also confirmed that the lithium air battery prepared in Example 4 exhibited stable charge and discharge characteristics, unlike the lithium air battery prepared in Comparative Example 2.

In addition, charge-discharge characteristics of the lithium air batteries prepared in Examples 5 and 6 were evaluated in the same manner as in Example 4.

As a result, it was confirmed that the lithium air batteries prepared in Examples 5 and 6 exhibited similar charge-discharge characteristics to those of the lithium air battery prepared in Example 4.

As described above, according to one or more embodiments, an electrolyte for an alkali metal-air battery has improved stability, and thus is chemically and electrochemically stable. When such an electrolyte is used, an alkali metal-air battery and a secondary battery that have improved cell performance (e.g., lifespan) may be prepared.

It should be understood that embodiments described herein should be considered in a descriptive sense only and not for purposes of limitation. Descriptions of features or aspects within each embodiment may typically be considered as available for other similar features or aspects in other embodiments.

While one or more embodiments have been described with reference to the figures, it will be understood by those of ordinary skill in the art that various changes in form and details may be made therein without departing from the scope of the invention as defined by the following claims.

## Claims

1. A lithium-air battery comprising:
a cathode;
an anode; and
an electrolyte, **characterized in that** the electrolyte comprises a compound comprising a first repeating unit represented by Formula 1: 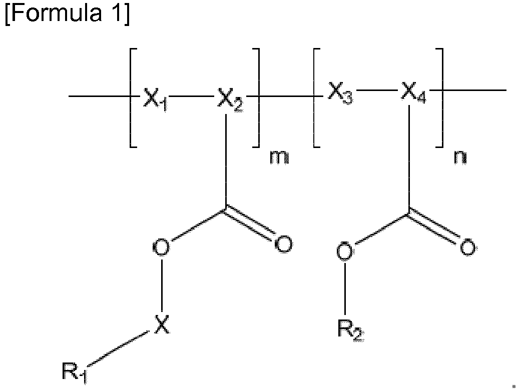 wherein, in Formula 1, R₁ is a group selected from groups represented by Formulae 2 and 3: 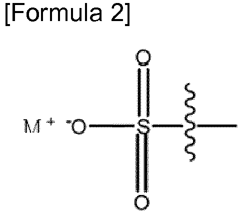 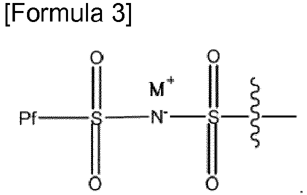
X₁ and X₃ are each independently an unsubstituted methylene moiety,
X₂ and X₄ are each independently selected from -CH, -CF, -C(CH₃), - C(CH₂CH₃), -C(CF₂CF₃), and -C(CF₃),
X indicates is a substituted or unsubstituted C₁-C₂₀ alkylene moiety, a substituted or unsubstituted C₆-C₂₀ arylene moiety, or a substituted or unsubstituted C₁-C₂₀ heteroarylene moiety,
Pf is fluorine, a substituted or unsubstituted C₁-C₁₀ alkyl moiety, a substituted or unsubstituted C₆-C₁₀ aryl moiety, or a substituted or unsubstituted C₁-C₁₀ heteroaryl moiety,
R₂ is a substituted or unsubstituted C₁-C₃₀ alkyl moiety, a C₁-C₃₀ heteroalkyl moiety, or a substituted or unsubstituted C₆-C₃₀ aryl moiety,
M is Li, and
0<m≤1, 0≤n≤1, and the sum of m and n is 1.

2. The lithium-air battery of claim 1, wherein the group represented by Formula 2 is represented by Formula 2a: 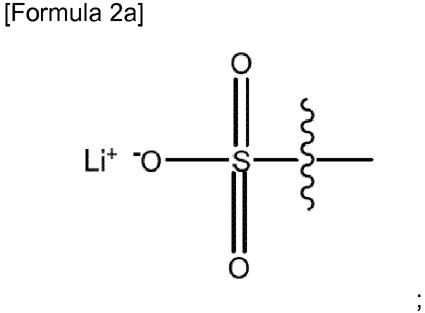 and/or wherein the group represented by Formula 3 is represented by Formula 3a: 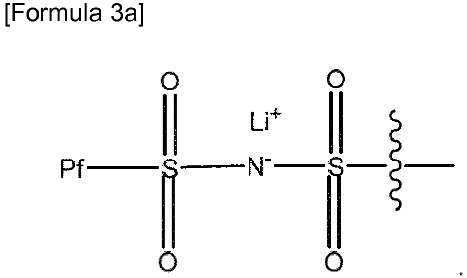 wherein Pf in Formula 3a is a C₁-C₁₀ alkyl moiety.

3. The lithium-air battery of any of claims 1-2, wherein Pf is a C₁-C₁₀ fluoroalkyl moiety, preferably wherein the C₁-C₁₀ fluoroalkyl moiety comprises a C₁-C₁₀ perfluoroalkyl moiety.

4. The lithium-air battery of claim 1, wherein the compound represented by Formula 1 is represented by one of Formulae 4 to 8: 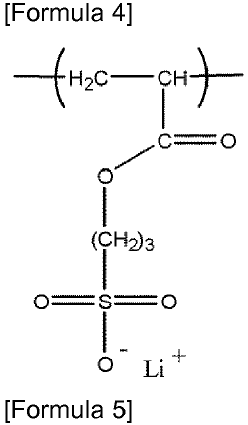 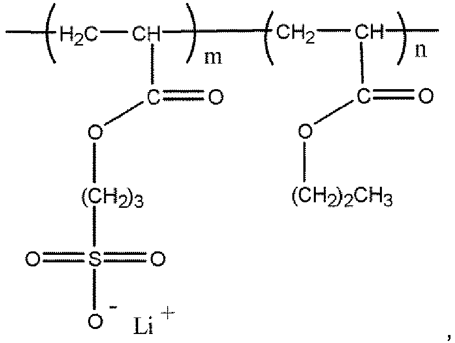 wherein, m and n in Formula 5 are each independently in a range of 0.01 to 0.99, and the sum of m and n is 1, 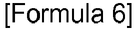 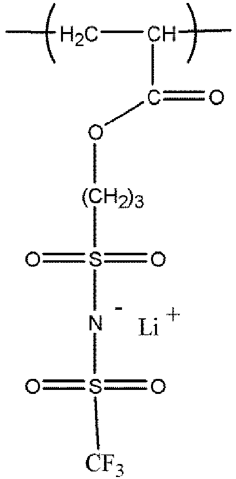 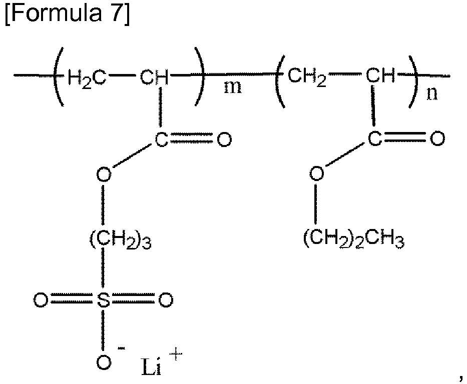 wherein m and n in Formula 7 are each independently in a range of 0.01 to 0.99, and the sum of m and n is 1,
[Formula 8] 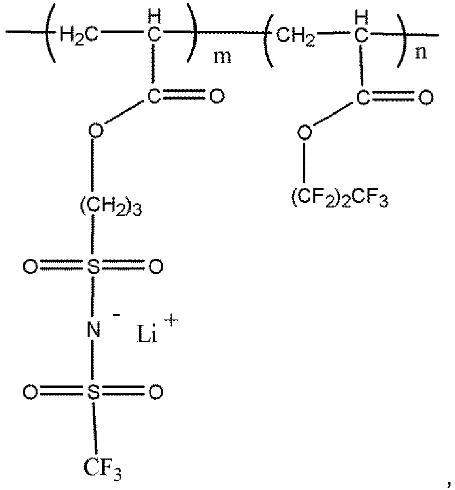 wherein m and n in Formula 8 are each independently in a range of 0.01 to 0.99, and the sum of m and n is 1.

5. The lithium-air battery of any of claims 1-4, wherein the compound comprising the first repeating unit represented by Formula 1 in the electrolyte is located at an interface between the anode and the electrolyte or at an interface between the cathode and the electrolyte.

6. The lithium-air battery of any of claims 1-5, wherein an interfacial layer including the compound comprising the first repeating unit represented by Formula 1 is disposed on at least one electrode surface selected from the cathode and the anode.

7. The lithium-air battery of claim 6, wherein the interfacial layer is formed upon charging of the battery, discharging of the battery, assembling of the battery, or filling of a cell container.

8. The lithium-air battery of any of claims 1-7 wherein the anode comprises carbon, a layered form of carbon, a metallic material, or an anode material capable of reversible lithium insertion, and enables reversible lithium insertion, and the cathode comprises oxygen (O₂) as an electroactive material.

9. The lithium-air battery of any of claims 1-8, wherein the electrolyte comprises a solid-type compound.

## Patentansprüche

1. Lithium-Luft-Batterie, umfassend:
eine Kathode;
eine Anode; und
einen Elektrolyten, **dadurch gekennzeichnet, dass** der Elektrolyt eine Verbindung umfasst, die eine erste Wiederholungseinheit umfasst, die durch Formel 1 dargestellt ist: 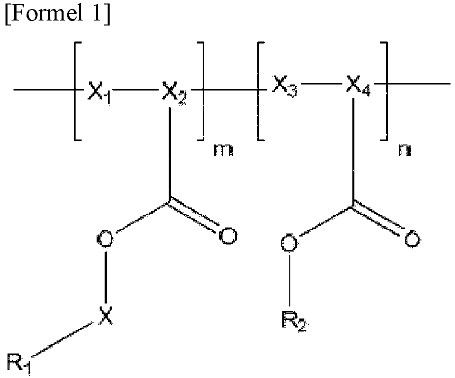 wobei in Formel 1 R₁ eine Gruppe ist, die aus Gruppen ausgewählt ist, die durch Formel 2 und 3 dargestellt sind: 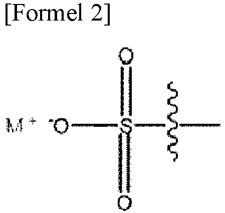 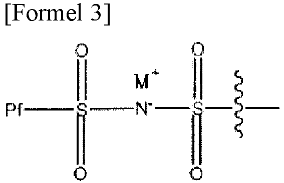
X₁ und X₃ jeweils unabhängig eine nicht substituierte Methyleneinheit sind,
X₂ und X₄ jeweils unabhängig ausgewählt sind aus -CH, -CF, -C(CH₃), - C(CH₂CH₃), - C(CF₂CF₃) und -C(CF₃),
X angibt, eine substituierte oder nicht substituierte C₁-C₂₀-Alkyleneinheit, eine substituierte oder nicht substituierte C₆-C₂₀-Aryleneinheit oder eine substituierte oder nicht substituierte C₁-C₂₀-Heteroaryleneinheit ist,
Pf Fluor, eine substituierte oder nicht substituierte C₁-C₁₀-Alkyleinheit, eine substituierte oder nicht substituierte C₆-C₁₀-Aryleinheit oder eine substituierte oder nicht substituierte C₁-C₁₀-Heteroaryleinheit ist,
R₂ eine substituierte oder nicht substituierte C₁-C₃₀-Alkyleinheit, eine C₁-C₃₀-Heteroalkyleinheit oder eine substituierte oder nicht substituierte C₆-C₃₀-Aryleinheit ist,
M Li ist, und
0<m≤1, 0≤n≤1 und die Summe von m und n 1 ist.

2. Lithium-Luft-Batterie nach Anspruch 1, wobei die Gruppe dargestellt durch Formel 2 durch Formel 2a dargestellt ist: 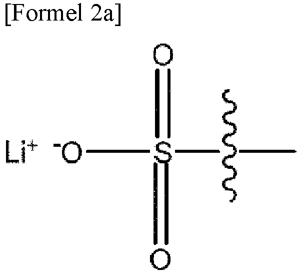 und/oder wobei die Gruppe dargestellt durch Formel 3 durch Formel 3a dargestellt ist: 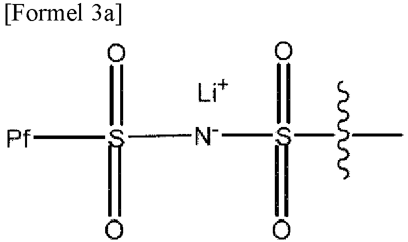 wobei Pf in Formel 3a eine C₁-C₁₀-Alkyleinheit ist.

3. Lithium-Luft-Batterie nach einem der Ansprüche 1-2, wobei Pf eine C₁-C₁₀-Fluoralkyleinheit ist, wobei bevorzugt die C₁-C₁₀-Fluoralkyleinheit eine C₁-C₁₀-Perfluoralkyleinheit umfasst.

4. Lithium-Luft-Batterie nach Anspruch 1, wobei die Verbindung dargestellt durch Formel 1 durch eine der Formeln 4 bis 8 dargestellt ist: 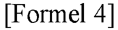 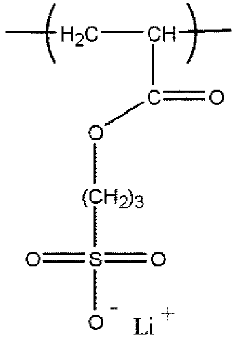 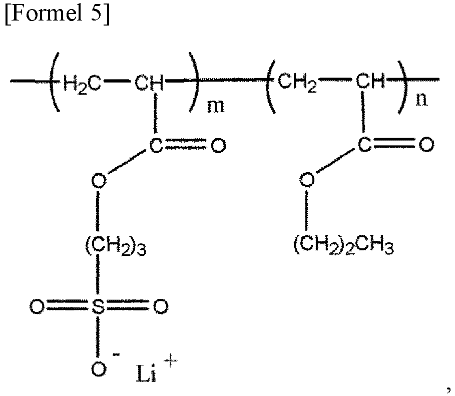 wobei m und n in Formel 5 jeweils unabhängig in einem Bereich von 0,01 bis 0,99 sind und die Summe von m und n 1 ist, 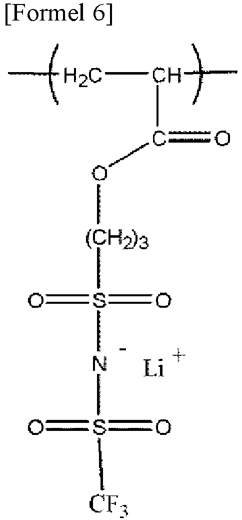 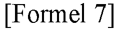 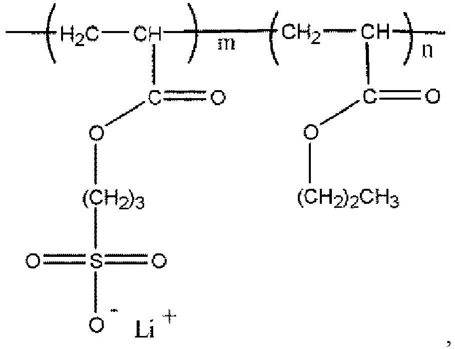 wobei m und n in Formel 7 jeweils unabhängig in einem Bereich von 0,01 bis 0,99 sind und die Summe von m und n 1 ist, 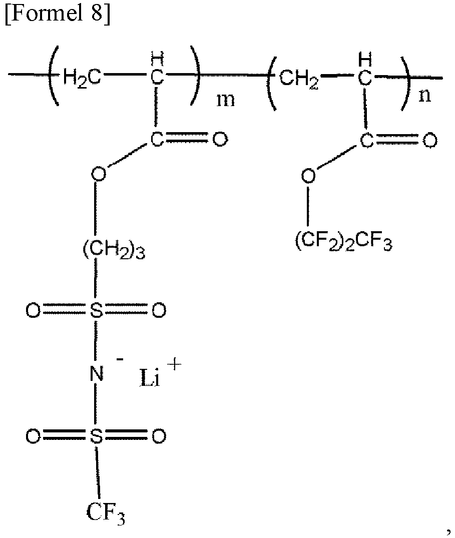 wobei m und n in Formel 8 jeweils unabhängig in einem Bereich von 0,01 bis 0,99 sind und die Summe von m und n 1 ist.

5. Lithium-Luft-Batterie nach einem der Ansprüche 1-4, wobei sich die Verbindung, welche die erste Wiederholungseinheit dargestellt durch Formel 1 in dem Elektrolyten umfasst, an einer Schnittstelle zwischen der Anode und dem Elektrolyten oder an einer Schnittstelle zwischen der Kathode und dem Elektrolyten befindet.

6. Lithium-Luft-Batterie nach einem der Ansprüche 1-5, wobei eine Schnittstellenschicht, welche die Verbindung beinhaltet, welche die erste Wiederholungseinheit dargestellt durch Formel 1 umfasst, auf zumindest einer Elektrodenoberfläche angeordnet ist, die aus der Kathode und der Anode ausgewählt ist.

7. Lithium-Luft-Batterie nach Anspruch 6, wobei die Schnittstellenschicht beim Laden der Batterie, Entladen der Batterie, Zusammenbauen der Batterie oder Füllen eines Zellbehälters gebildet wird.

8. Lithium-Luft-Batterie nach einem der Ansprüche 1-7, wobei die Anode Kohlenstoff, eine geschichtete Form von Kohlenstoff, ein metallisches Material oder ein Anodenmaterial umfasst, der/die/das zu reversibler Lithiuminsertion fähig ist, und reversible Lithiuminsertion ermöglicht, und die Kathode Sauerstoff (O₂) als elektroaktives Material umfasst.

9. Lithium-Luft-Batterie nach einem der Ansprüche 1-8, wobei der Elektrolyt eine Verbindung vom festen Typ umfasst.

## Revendications

1. Batterie lithium-air comprenant :
une cathode ;
une anode ; et
un électrolyte, **caractérisé en ce que** l'électrolyte comprend un composé comprenant un premier motif de répétition représenté par la Formule 1 : 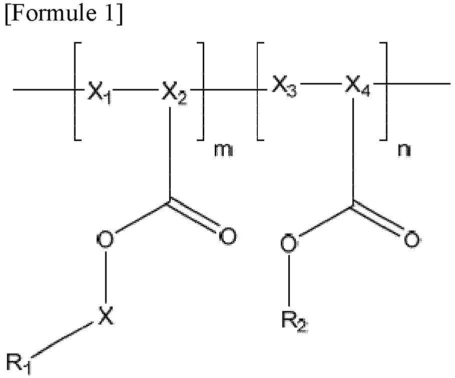 dans laquelle, dans la Formule 1, R₁ représente un groupe choisi parmi les groupes représentés par les Formules 2 et 3 : 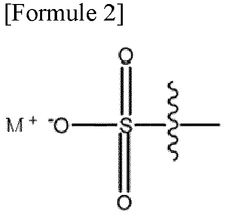 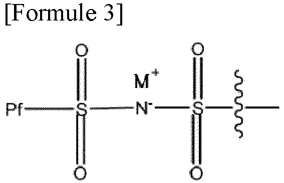
X₁ et X₃ représentent chacun indépendamment un fragment méthylène non substitué,
X₂ et X₄ sont chacun indépendamment choisis parmi -CH, -CF, -C(CH₃), -C(CH₂CH₃), -C(CF₂CF₃), et -C(CF₃),
X indique un fragment alkylène en C₁-C₂₀ substitué ou non substitué, un fragment arylène en C₆-C₂₀ substitué ou non substitué, ou un fragment hétéroarylène en C₁-C₂₀ substitué ou non substitué,
Pf représente le fluor, un fragment alkyle en C₁-C₁₀ substitué ou non substitué, un fragment aryle en C₆-C₁₀ substitué ou non substitué, ou un fragment hétéroaryle en C₁-C₁₀ substitué ou non substitué,
R₂ représente un fragment alkyle en C₁-C₃₀ substitué ou non substitué, un fragment hétéroalkyle en C₁-C₃₀, ou un fragment aryle en C₆-C₃₀ substitué ou non substitué,
M représente Li, et
0<m≤1, 0≤n≤1, et la somme de m et n vaut 1.

2. Batterie lithium-air selon la revendication 1, dans laquelle le groupe représenté par la Formule 2 est représenté par la Formule 2a : 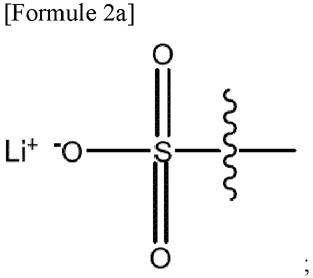 et/ou dans laquelle le groupe représenté par Formule 3 est représenté par la Formule 3a : 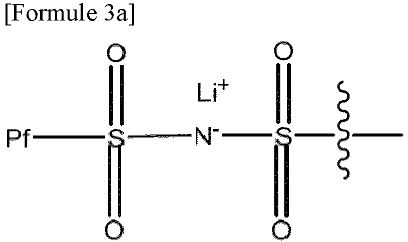 dans laquelle Pf dans la Formule 3a représente un fragment alkyle en C₁-C₁₀.

3. Batterie lithium-air selon l'une quelconque des revendications 1 à 2, dans laquelle Pf représente un fragment fluoroalkyle en C₁-C₁₀, de préférence dans laquelle le fragment fluoroalkyle en C₁-C₁₀ comprend un fragment perfluoroalkyle en C₁-C₁₀.

4. Batterie lithium-air selon la revendication 1, dans laquelle le composé représenté par la Formule 1 est représenté par l'une des Formules 4 à 8 : 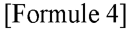 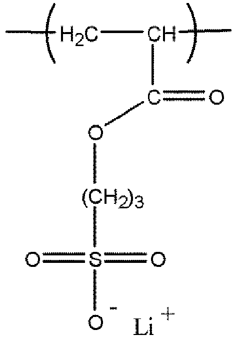 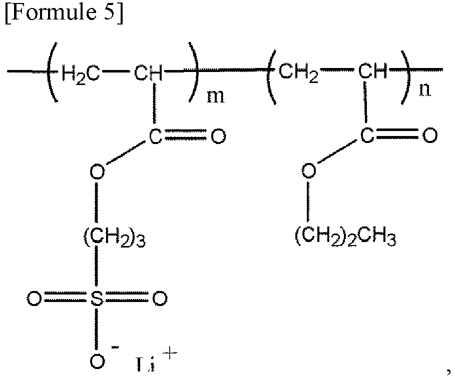 dans laquelle, m et n dans la Formule 5 valent chacun indépendamment un nombre compris dans une plage allant de 0,01 à 0,99, et la somme de m et n vaut 1, 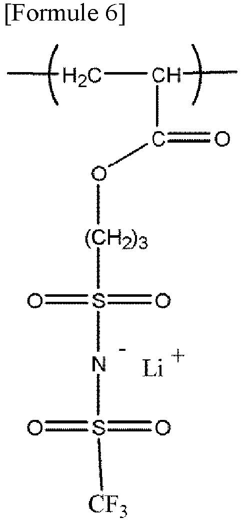 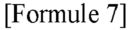 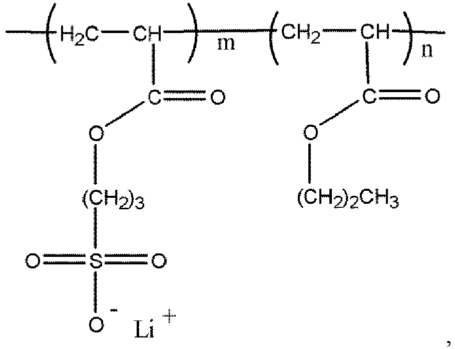 dans laquelle m et n dans la Formule 7 valent chacun indépendamment un nombre compris dans une plage allant de 0,01 à 0,99, et la somme de m et n vaut 1, 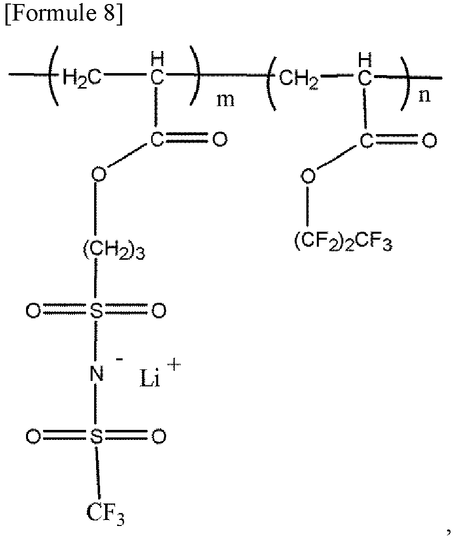 dans laquelle m et n dans la Formule 8 valent chacun indépendamment un nombre compris dans une plage allant de 0,01 à 0,99, et la somme de m et n vaut 1.

5. Batterie lithium-air selon l'une quelconque des revendications 1 à 4, dans laquelle le composé comprenant le premier motif de répétition représenté par la Formule 1 dans l'électrolyte est situé au niveau d'une interface entre l'anode et l'électrolyte ou au niveau d'une interface entre la cathode et l'électrolyte.

6. Batterie lithium-air selon l'une quelconque des revendications 1 à 5, dans laquelle une couche interfaciale comprenant le composé comprenant le premier motif de répétition représenté par la Formule 1 est disposée sur au moins une surface d'électrode choisie parmi la cathode et l'anode.

7. Batterie lithium-air selon la revendication 6, dans laquelle la couche interfaciale est formée lors de la charge de la batterie, de la décharge de la batterie, de l'assemblage de la batterie, ou du remplissage d'un conteneur de cellules.

8. Batterie lithium-air selon l'une quelconque des revendications 1 à 7, dans laquelle l'anode comprend du carbone, une forme en couches de carbone, un matériau métallique, ou un matériau d'anode apte à l'insertion réversible du lithium, et permet l'insertion réversible du lithium, et la cathode comprend de l'oxygène (O₂) en tant que matériau électroattracteur.

9. Batterie lithium-air selon l'une quelconque des revendications 1 à 8, dans laquelle l'électrolyte comprend un composé de type solide.
